# EUROPÄISCHE PATENTSCHRIFT

(11) **EP 1 227 884 B1**
(45) Veröffentlichungstag und Bekanntmachung des Hinweises auf die Patenterteilung: **28.12.2005**
(21) Anmeldenummer: 00966065.5
(22) Anmeldetag: 21.09.2000
(51) Int. Cl.: B01J 37/34, B01J 23/755, B01J 23/75, C25D 3/12, H01M 4/88

(54) **Verfahren zur Herstellung eines Elektrokatalysators**
Process for preparing an electrocatalyst
Procédé pour préparer un électrocatalyseur

(30) Priorität: 28.09.1999 DE 19946481
(43) Veröffentlichungstag der Anmeldung: 07.08.2002
(73) Patentinhaber: Surtec Produkte und Systeme für die Oberflächenbehandlung GmbH, 64673 Zwingenberg (DE)
(72) Erfinder: JANSEN, Rolf, 55276 Oppenheim (DE)
(74) Vertreter: Körfer, Thomas
(86) Internationale Anmeldenummer: PCT/EP2000/009261
(87) Internationale Veröffentlichungsnummer: WO 2001/023090

(56) Entgegenhaltungen:
- DE-A- 2 436 700
- DE-A- 2 839 314
- US-A- 2 115 019
- US-A- 2 844 530
- US-A- 3 855 089
- US-A- 4 019 969
- US-A- 4 115 322
- US-A- 4 132 606
- US-A- 5 580 838
- JANSEN R.; PREIKSCHAT P.: 'Metalle schneller auflösen' GALVANOTECHNIK MO Bd. 53, 1999, XP001007768

## Beschreibung

Die Erfindung betrifft ein Verfahren zur Herstellung einer katalytisch wirksamen nickel und/oder kobalthaltigen Schicht.

Katalysatoren werden in der chemischen Technik z. B. bei Hydrierungen und Dehydrierungen, in der Energietechnik als Negative in einer Brennstoffzelle und im Automobil zur Abgasentgiftung eingesetzt. Dabei handelt es sich in den meisten Fällen um Edel- bzw. Halbedelmetalle, die sich durch eine besonders hohe Austauschstromdichte der Wasserstoffentwicklung auszeichnen. Beispielsweise werden Wasserstoffkatalysatoren für kompakte Zinklösestationen in der konventionellen Galvanotechnik verwendet.

Aus der DE 197 11 717 A1 ist eine Vorrichtung zum Auflösen von unedlen Metallen, insbesondere von Zink, bekannt. Dabei werden die unedlen Metalle mit Kobalt, Nickel sowie Legierungen und/oder Verbindungen dieser Metalle in elektrisch leitenden Kontakt gebracht. In der Regel erfolgt dieses Inkontaktbringen durch Einfüllen des aufzulösenden unedlen Metalls in einen mit Nickel beschichteten Stahlkorb.

Es hat sich gezeigt, daß die Verwendung eines mit Nickel beschichteten Stahlkorbs bei der vorgenannten Vorrichtung zur Auflösung von unedlen Metallen zu einer beschleunigten Auflösung des Metalles führt. Aufgrund der beschleunigten Auflösung des unedlen Metalls, wie beispielsweise Zink, können die entsprechenden Lösungsanlagen kleiner und somit kostengünstiger gestaltet werden.

Weiterhin offenbart ein Sonderdruck aus der Fachzeitschrift "Metalloberfläche", 1/99, 53. Jahrgang, Carl Hanser Verlag, München, mit dem Titel "Metalle schneller auflösen" einen Wasserstoffkatalysator. Dieser Wasserstoffkatalysator wird als dünne Schicht in einer Dicke von 2 µm bis 10 µm auf Stahl galvanisch aufgebracht. Dabei handelt es sich um eine extrem oberflächenreiche dotierte Nickelschicht, die eine hohe Austauschstromdichte und eine gute katalytische Aktivität besitzt.

Aus der US-A-2844530 ist ein Verfahren zur Abscheidung von Schwarznickel zur Herstellung einer dekorativen Beschichtung bekannt. Die in dem Verfahren eingesetzte Elektrolytlösung enthält Ammoniumchlorid, da anderenfalls eine graue, raue Oberfläche erhalten wird.

In der US-A-4115322 wird ein Verfahren zur Herstellung von Elektrokatalysatoren durch Aufbringung von Nickel, Edelmetall und Legierungen davon auf pyrolytischem Graphit beschrieben. An dem Graphitträger bildet sich ein Überpotential, das die Bildung von Mikrokristallen ermöglicht. Zu diesem Zweck wird bei der Elektrolyse eine Cyanidverbindung eingesetzt, die eine große Stabilitätskonstante besitzt.

Die DE 28 39 314 A1 beschreibt gemeinsame Abscheidung von zwei Metallen, wonach dann ein Metall selektiv aufgelöst wird. Dadurch wird eine nicht kompakte poröse Struktur erzeugt.

Es besteht nun ein Bedarf an vielseitig verwendbaren katalytischen Oberflächen mit einer noch besseren katalytischen Aktivität. Insbesondere, besteht ein sowohl ökonomisches als auch ökologisches Bedürfnis, die Lösungsanlagen von Galvanisierungsvorrichtungen weiter zu verkleinern.

Die Aufgabe wird durch ein Verfahren gemäß Patentanspruch 1 gelöst. Weitere bevorzugte Ausführungsformen sind in den Unteransprüchen beschrieben.

Das erfindungsgemäße Verfahren ermöglicht die Herstellung einer katalytisch wirksamen nickel- und/oder kobalthaltigen Schicht mit knollenartigen Vorsprüngen auf einem elektrisch leitfähigen Trägermaterial, das beispielsweise in Zinklöseabteilen unter Verwendung von zyanidfreien alkalischen Elektrolyten verwendet werden kann. Unter Verwendung der gemäß dem erfindungsgemäßen Verfahren hergestellten katalytisch wirksamen nickel- und/oder kobalthaltigen Schicht in einem separaten Löseabteil einer Verzinkungsanlage können besonders hochwertige Verzinkungen bereitgestellt werden.

Die Oberfläche der erhaltenen katalytisch wirksamen nickel- und/oder kobalthaltigen Schicht weist knollenartige Vorsprünge auf, die zu einer Ausbildung einer sehr großen Oberfläche führen. Diese große Oberfläche bewirkt eine außerordentliche Steigerung der katalytischen Aktivität der nickel- und/oder kobalthaltigen Schicht. Eine weitere Untersuchung der Oberfläche der knollenartigen Vorsprünge hat ergeben, daß die Oberfläche des einzelnen knollenartigen Vorsprungs wiederum knollenartige Vorsprünge aufweist, was zu einer weiteren wesentlichen Vergrößerung der katalytischen Oberfläche führt.

Unter einem "knollenartigen Vorsprung" wird im Sinne der Erfindung verstanden, daß sich auf einer aufgebrachten Schicht kugelförmige Erhebungen ausgebildet haben. Diese kugelförmigen Erhebungen weisen auf ihrer Oberfläche selbst weitere kleinere kugelfömige Erhebungen bzw. Vorsprünge auf. Diese "knollenartigen Vorsprünge" bzw. kugelförmigen Erhebungen bewirken eine immense Oberflächenvergrößerung.

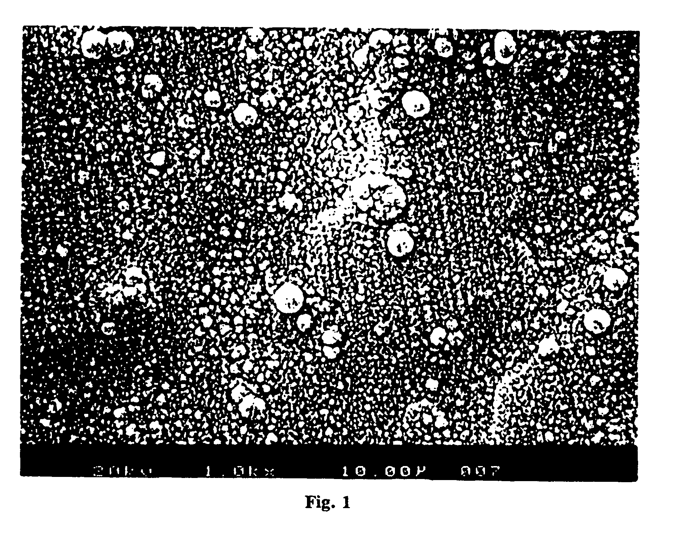

Zur weiteren Veranschaulichung ist in Fig. 1 eine rasterelektronenmikroskopische Aufnahme einer Schicht mit knollenartigen Vorsprüngen mit 1000-facher Vergrößerung gezeigt.

Zur Herstellung der nickelionenhaltigen Elektrolytlösung können sämtliche Nickelsalze verwendet werden, die unter sauren Bedingungen löslich sind. Beispielsweise können dabei Nickel(II)-chlorid, Nickel(II)-chlorid-hydrat, Nickel(II)-chlorid-hexahydrat, Nickel(II)-carbonat, Nickel(II)-bromid, Nickel (II)-bromid-hydrat, Nickel(II)-fluorid, Nickel (II)-fluorid-tetrahydrat, Nickel (II) -hydroxid, Nickel(II)-jodid, Nickel (II) -nitrat, Nickel (II) -nitrat-hexahydrat, Nickel (II)-sulfat, Nickel(II)-sulfat-hexahydrat, Nickel(II)-sulfat-heptahydrat, Nickel-sulfid, etc. verwendet werden.

Besonders bevorzugt wird Nickel(II)-chlorid-hexahydrat verwendet.

Zur Herstellung einer kobaltionenhaltigen Elektrolytlösung kann jedes unter sauren Bedingungen lösliche Kobaltsalz verwendet werden. Beispielsweise können dabei Kobalt(II)-bromid, Kobalt(II)-bromid-hydrat, Kobalt(II)-carbonat-hydrat, Kobalt(II)-chlorid, Kobalt(II)-chlorid-hydrat, Kobalt(II)-chlorid-hexahydrat, Kobalt(II)-fluorid, Kobalt(II)-fluorid-tetrahydrat, Kobalt(III)-fluorid, Kobalt(II)-hydroxid, Kobalt(II)-jodid, Kobalt(II)-nitrat-hexahydrat, Kobalt(II)-perchlorat, Kobalt(II)-perchlorat-hexahydrat, Kobalt(II)-sulfat, Kobalt(II)-sulfat-hydrat, etc. verwendet werden.

Besonders bevorzugt wird Kobalt(II)-chlorid-hexahydrat verwendet.

Zur Einstellung der sauren Bedingungen können die üblicherweise verwendeten Mineralsäuren, wie beispielsweise Salzsäure, Schwefelsäure, etc. oder Mischungen davon verwendet werden.

Wesentlich bei dem vorliegenden Verfahren ist, daß die Elektrolytlösung frei von organischen Additiven und Puffersubstanzen ist.

Somit enthält die Elektrolytlösung insbesondere keine Borsäure bzw. Borate. Weiterhin wird auf den Zusatz von üblicherweise zugesetzten organischen Additiven wie beispielsweise Tensiden verzichtet. Insofern weist die bei dem erfindungsgemäßen Verfahren zu verwendende Elektrolytlösung vorteilhaft eine einfachere Zusammensetzung auf. Insofern kann das vorliegende Verfahren kostengünstiger als die bislang im Stand der Technik verwendeten Verfahren durchgeführt werden. Weiterhin ist die Verwendung einer von organischen Additiven freien Elektrolytlösung auch unter dem Gesichtspunkt der Umweltverträglichkeit sehr vorteilhaft.

Vor der Durchführung des Verfahrens wird das elektrisch leitfähige Trägermaterial in der Regel gründlich gereinigt. Dabei können beispielsweise die bei der Metallentfettung verwendeten Mittel wie beispielsweise organische Lösungsmittel, wie Fluoralkane, Tri- und Perchlorethylen, Spiritus, etc., oder beispielsweise Oxid-auflösende Beizmittel, wie Phosphorsäure, Amidoschwefelsäure, Oxalsäure, heiße Schwefelsäure etc., eingesetzt werden.

Es ist aber auch möglich, das Trägermaterial zunächst in einer alkalischen Lösung bei erhöhter Temperatur für einen ausreichenden Zeitraum zu halten. Beispielsweise kann die alkalische Lösung eine Temperatur von 50° C bis 70° C, insbesondere von etwa 60° C, aufweisen. Üblicherweise wird das Trägermaterial nach der Reinigung in einem alkalischen Reinigungsbad in einem sauren Bad gebeizt. Als Beizlösung kann dabei beispielsweise eine konzentrierte Salzsäurelösung verwendet werden, die zuvor mit einem gleichen Volumenanteil Wasser verdünnt wurde (50 %ige Salzsäure).

Grundsätzlich können sämtliche in der Galvanotechnik verwendeten Reinigungsverfahren zur Reinigung der zu beschichtenden Gegenstände bei der vorliegenden Erfindung verwendet werden.

Bei einer bevorzugten Ausführungsform des erfindungsgemäßen Verfahrens liegt die Temperatur der Elektrolytlösung zwischen 0°C und 30°C. Besonders bevorzugt liegt die Temperatur zwischen 10°C und 25°C und weiter bevorzugt zwischen 15°C und 25°C. Besonders bevorzugt liegt die Temperatur der Elektrolytlösung zwischen 18°C und 23°C.

Bei einer weiteren Ausführungsform der vorliegenden Erfindung wird der pH-Wert der Elektrolytlösung auf pH 2 bis pH 6 eingestellt. Besonders bevorzugt wird der pH-Wert auf etwa 3 eingestellt. Es hat sich herausgestellt, daß bei diesen pH-Werten die sich während des Abscheidens des Nickels und/oder Kobalts bildenden knollenartigen Vorsprünge eine besonders große Oberfläche aufweisen. Unter einer besonders großen Oberfläche wird im Sinne der Erfindung verstanden, daß die Oberfläche der knollenartigen Vorsprünge selbst wiederum aus knollenartigen Vorsprüngen gebildet wird. Auch diesen knollenartigen Vorsprünge weisen dann wiederum knollenartige Vorsprünge auf. Auf diese Art und Weise wird letztendlich eine sehr große katalytisch wirksame nickel- und/oder kobalthaltige Schicht bereitgestellt.

Erfindungsgemäß enthält die nickelionen- und/oder kobaltionenhaltige Elektrolytlösung weiter Metallionen, die aus der Gruppe der Metalle, die aus Palladium, Platin, Iridium, Ruthenium, Gold, Kupfer, Silber und Mischungen davon besteht, ausgewählt werden.

Es hat sich gezeigt, daß in Abhängigkeit der späteren Verwendung eine Dotierung der erfindungsgemäßen Katalysatorschicht vorteilhaft ist. Besonders bevorzugt sind dabei Kupfer- und Silberionen. Diese Metallionen können beispielsweise als Salze der vorgenannten Säureanionen der Elektrolytlösung zugesetzt werden. Selbstverständlich ist es aber auch möglich, andere Metallsalze der Elektrolytlösung zuzusetzen.

Weiterhin ist es bevorzugt, das die Elektrolytlösung eine Nickel- und/oder Kobaltionenkonzentration in einem Bereich, der von 0,004 mol/l bis zur Sättigungsgrenze reicht, aufweist. Bei einer geringeren Konzentration an Nickel- und/oder Kobaltionen dauert der Abscheidungsvorgang der Nickel- und/oder Kobaltionen entsprechend länger.

Insofern ist es vorteilhaft in der Nähe der Sättigungsgrenze des jeweils verwendeten Nickel- und/oder Kobaltsalzes zu arbeiten. Bei Verwendung von beispielsweise Nickel(II)-chlorid Hexahydrat kann in der Elektrolytlösung eine Konzentration von etwa 250 g/l eingestellt werden. Die Konzentration von Kobalt (II)-chlorid Hexahydrat kann beispielsweise auf etwa 76 g/l eingestellt werden. Die vorgenannten Angaben sind nur beispielhaft.

Weiterhin ist es bevorzugt, daß die während der elektrolytischen Abscheidung der nickel- und/oder kobalthaltigen Schicht angelegte Stromdichte zwischen 0,002 A/dm² und 2 A/dm², bevorzugt zwischen 0,1 A/dm² und 1 A/dm², besonders bevorzugt bei etwa 0,5 A/dm², liegt.

Die angelegte Stromdichte korreliert mit der Konzentration der Nickel- und/oder Kobaltionen in der Elektrolytlösung. Sofern die Nickel- und/oder Kobaltsalzkonzentration nahe der Sättigung ist, können wesentlich größere Stromdichten erreicht werden als bei einer entsprechend geringeren Salzkonzentration.

Die jeweils einzustellende Salzkonzentration und damit auch die jeweils anzulegende Stromdichte hängen von den weiteren Randbedingungen ab, wie beispielsweise von der Art des verwendeten Salzes, Dauer der elektrolytischen Abscheidung, Art des verwendeten Trägermaterials, Temperatur der Elektrolytlösung, weiter zugesetzte Metallsalze und/oder Alkalisalze, etc..

Bei einer weiteren Ausführungsform der vorliegenden Erfindung enthält das Trägermaterial Eisen, Stahl, vernickelten Stahl, Nickel, Titan, Kohlenstoff oder elektrisch leitfähigen Kunststoff oder Mischungen davon.

Selbstverständlich kann das Trägermaterial auch ausschließlich aus den einzelnen vorgenannten Materialien bestehen. Auch ist es möglich, andere elektrisch leitfähige Trägermaterialien zu verwenden. Insbesondere kann jegliche Art von Stahl verwendet werden, der mit weiteren Metallen wie z.B. Chrom, Vanadium, Wolfram, Molybdän, Kobalt etc. legiert ist.

Das Trägermaterial kann weiterhin teilweise oder vollständig aus Kohlenstoff, bevorzugt in der Form von Graphit, bestehen. Der Kohlenstoff kann aber auch beispielsweise in Form von Kohlenstoffasern oder Ruß in Kunststoffen unter Bereitstellung eines elektrisch leitfähigen Kunststoffs vorliegen.

Selbstverständlich können auch elektrisch leitfähige Kunststoffe bzw. elektrisch leitfähige Polymere verwendet werden, bei denen die elektrische Leitfähigkeit durch andere Füllstoffe als Ruß oder Kohlenstoffasern bewirkt wird.

Beispielsweise können zur Herstellung elektrisch leitfähiger Kunststoffe als Füllstoffe auch Polymere mit intrinsischer Leitfähigkeit verwendet werden wie beispielsweise Polyacetylen, Polyphenylen, Polythiophen, Polyfuran, Polypyrrol (Polypyrrolylen), Polyphenylenvinylen, Polyphenylenbutadien, Polyacen, Polyanilin, 3,4-Polyethylendioxythiophen, etc. verwendet werden.

Als besonders geeignet hat sich Polypyrrolylen als Trägermaterial bei der Herstellung von Elektroden erwiesen.

Diese intrinsisch leitfähigen Polymere können als Füllstoffe in anderen Polymeren (Kunststoffen) zur Bewirkung der elektrischen Leitfähigkeit verwendet werden. Es ist aber auch möglich, daß Trägermaterial überwiegend oder vollständig unter Verwendung dieser intrinsisch leitfähigen Polymere herzustellen.

Im Hinblick auf das zu verwendende elektrisch leitfähige Trägermaterial gibt es keine Beschränkungen. Die vorgenannten Trägermaterialien haben sich jedoch als besonders verwendbar erwiesen. Insbesondere sind diese Trägermaterialien in großen Mengen zu günstigen Preisen zu erwerben.

Besonders bevorzugt weist die katalytisch wirksame nickel- und/oder kobalthaltige Schicht knollenartige Vorsprünge mit Abmessungen zwischen 0,1 µm und 10 µm auf. Besonders bevorzugt weisen die knollenartigen Vorsprünge Abmessungen von etwa 1 µm auf.

Besonders vorteilhaft wird die erfindungsgemäß hergestellte katalytische Schicht auf einem Trägermaterial als Elektrode bei elektrolytischen Vorgängen verwendet. Insbesondere kann die vorgenannte Elektrode als Elektrode bei der Herstellung von Wasserstoff und/oder Sauerstoff aus Wasser verwendet werden. Weiterhin kann die vorgenannte Elektrode in der Galvanotechnik als Wasserstoffkatalysator in Anlagen zur cyanidfreien alkalischen Verzinkung zum externen Auflösen von Zink verwendet werden. Die erfindungsgemäß hergestellte katalytische Schicht kann dabei beispielsweise auf Stahlkörbe aufgebracht werden, in die dann das aufzulösende Zink gegeben wird.

Weiterhin kann die vorgenannte Elektrode in einer Brennstoffzelle verwendet werden. Die vorgenannte Elektrode ist dabei preislich günstiger als die herkömmlicherweise verwendeten platinierten Anoden.

Selbstverständlich kann die Elektrode auch in einer Batterie oder einer Sekundärbatterie (Akkumutator) verwendet werden.

Des weiteren kann die erfindungsgemäß hergestellte katalytisch aktive Schicht mit knollenartigen Vorsprüngen auf einem Trägermaterial auch als Hydrierungskatalysator verwendet werden. Dabei ist ein die erfindungsgemäß hergestellte katalytisch aktive Schicht der vorliegenden Erfindung umfassender Hydrierungskatalysator sicherer als die pyrophoren Nickelschwämme und aktiver als die herkömmlicherweise verwendeten chemisch vernickelten Trägermaterialien.

Das nachfolgende Beispiel dient lediglich der weiteren Veranschaulichung und begrenzt daher nicht den Schutzumfang der Erfindung.

### Beispiel (nicht erfindungsgemäß)

Ein Stahlblech der Größe 10 cm x 10 cm wird einer elektrolytischen alkalischen Reinigung unterworfen. Dabei wird das Stahlblech für fünf Minuten in eine 60°C warme Natronlauge eingetaucht und als Anode geschaltet und ein Strom mit 20 A angelegt.

Die Natronlauge hat eine Konzentration von 3 mol/l. Daran anschließend wird das Stahlblech mit enthärtetem Wasser kurz abgespült und in einer 15 Gew.-%igen Salzsäure gebeizt, indem man das Stahlblech für 5 Minuten eintaucht.

Das Stahlblech wird dann kathodisch kontaktiert und in eine nickel- und kobalthaltige Elektrolytlösung eingetaucht. Als Anode wird Nickel verwendet. Die Elektrolytlösung enthält 250 g/l Nickel(II)chlorid-hexahydrat und 25 g/l Kobalt (II) chlorid-hexahydrat in enthärtetem Wasser. Der pH-Wert der Elektrolytlösung wurde unter Verwendung von Salzsäure auf pH 3,0 eingestellt.

Dann wurde bei einer Temperatur von 23°C für 60 Minuten eine Stromdichte von 0,5 A/dm² angelegt. Im Anschluß daran wurde das mit der katalytisch wirksamen nickel- und kobalthaltigen Schicht versehene Stahlblech der Elektrolytlösung entnommen und mit enthärtetem Wasser gespült und schließlich unter Verwendung von Warmluft getrocknet. Die katalytische nickel- und kobalthaltige Schicht war relativ gleichmäßig dunkel und stumpf.

## Patentansprüche

1. Verfahren zur Herstellung einer katalytisch wirksamen zumindest im wesentlichen aus Nickel und/oder Kobalt bestehenden Schicht mit knollenartigen Vorsprüngen auf einem elektrisch leitfähigen Trägermaterial,
wobei die zumindest im wesentlichen aus Nickel und/oder Kobalt bestehenden Schicht unter sauren Bedingungen aus einer nickelionen- und/oder kobaltionenhaltigen Elektrolytlösung auf dem Trägermaterial elektrolytisch abgeschieden wird,
wobei die Elektrolytlösung frei von organischen Additiven und Puffersubstanzen ist und
wobei die nickelionen- und/oder kobaltionenhaltige Elektrolytlösung weiter Metallionen enthält, die aus der Gruppe der Metalle, die aus Palladium, Platin, Iridium, Ruthenium, Gold, Kupfer, Silber und Mischungen davon besteht, ausgewählt werden.

2. Verfahren gemäß Anspruch 1, wobei die Elektrolytlösung eine Temperatur von 0°C bis 30°C aufweist

3. Verfahren gemäß einem der vorherigen Ansprüche, wobei die saure Elektrolytlösung einen pH von 2 bis 6, insbesondere von etwa 3, aufweist.

4. Verfahren gemäß einem der vorherigen Ansprüche, wobei die Elektrolytlösung eine Nickelionenkonzentration aufweist, die zwischen 0,004 mol/l und der Sättigungsgrenze des verwendeten Nickelsalzes liegt, und/oder eine Kobaltionenkonzentration aufweist, die zwischen 0,004 mol/l und der Sättigungsgrenze des verwendeten Kobaltsalzes liegt.

5. Verfahren gemäß einem der vorherigen Ansprüche, wobei die während der elektrolytischen Abscheidung der nickel- und/oder kobalthaltigen Schicht angelegte Stromdichte zwischen 0,002 A/dm² und 2 A/dm², insbesondere zwischen 0,1 A/dm² und 1 A/dm², insbesondere bei etwa 0,5 A/dm², liegt.

6. Verfahren gemäß einem der vorherigen Ansprüche, wobei das Trägermaterial Eisen, Stahl, vernickelten Stahl, Nickel Titan, Kohlenstoff, elektrisch leitfähigen Kunststoff oder Mischungen davon enthält.

## Claims

1. Process for preparing a catalytically active layer composed at least essentially of nickel and/or cobalt and having nodule-type protrusions on an electrically conductive support material,
wherein the layer composed at least essentially of nickel and/or cobalt is electrolytically deposited under acidic conditions on the support material from an electrolyte solution containing nickel ions and/or cobalt ions,
wherein the electrolyte solution is free of organic additives and buffering agents, and
wherein the electrolyte solution containing nickel ions and/or cobalt ions contains further metal ions selected from the group of metals comprising palladium, platinum, iridium, ruthenium, gold, copper, silver and mixtures thereof.

2. Process according to Claim 1, wherein the electrolyte solution is at a temperature of 0°C to 30°C.

3. Process according to either of the preceding claims, wherein the acidic electrolyte solution has a pH of 2 to 6, in particular of about 3.

4. Process according to any one of the preceding claims, wherein the electrolyte solution has a nickel ion concentration that is between 0.004 mol/l and the saturation limit of the nickel salt used, and/or a cobalt ion concentration that is between 0.004 mol/l and the saturation limit of the cobalt salt used.

5. Process according to any one of the preceding claims, wherein current density applied during the electrolytic deposition of the layer containing nickel and/or cobalt is between 0.002 A/dm² and 2 A/dm², in particular between 0.1 A/dm² and 1 A/dm², in particular about 0.5 A/dm².

6. Process according to any one of the preceding claims, wherein the support material contains iron, steel, nickel-plated steel, nickel, titanium, carbon, electrically conductive polymer or mixtures thereof.

## Revendications

1. Procédé pour fabriquer une couche à efficacité catalytique constituée essentiellement de nickel et/ou de cobalt, comprenant des saillies en forme de bulbe sur un matériau support électriquement conducteur, dans lequel :
- la couche constituée au moins essentiellement de nickel et/ou de cobalt est déposée par action électrolytique dans des conditions acides à partir d'une solution d'électrolytes contenant des ions de nickel et/ou de cobalt sur le matériau support ;
- la solution d'électrolytes est exempte d'additifs organiques et de substances tampon ; et
- la solution d'électrolytes contenant des ions de nickel et/ou de cobalt contient en plus des ions métalliques qui sont choisis parmi le groupe des métaux que forment le palladium, le platine, l'iridium, le ruthénium, l'or, le cuivre, l'argent et des mélanges de ceux-ci.

2. Procédé selon la revendication 1, dans lequel la solution d'électrolytes présente une température de 0°C à 30°C.

3. Procédé selon l'une des revendications précédentes, dans lequel la solution d'électrolytes acide présente un pH de 2 à 6, en particulier d'environ 3.

4. Procédé selon l'une des revendications précédentes, dans lequel la solution d'électrolytes présente une concentration d'ions de nickel se trouvant entre 0,004 mol/l et la limite de saturation du sel de nickel utilisé et/ou une concentration d'ions de cobalt se trouvant entre 0,004 mol/l et la limite de saturation du sel de cobalt utilisé.

5. Procédé selon l'une des revendications précédentes, dans lequel la densité de courant créée pendant l'électrodéposition de la couche contenant du nickel et/ou du cobalt se trouve entre 0,002 A/dm² et 2 A/dm², en particulier entre 0,1 A/dm² et 1 A/dm², en particulier aux alentours de 0,5 A/dm².

6. Procédé selon l'une des revendications précédentes, dans lequel le matériau support contient du fer, de l'acier, de l'acier nickelé, du nickel, du titane, du carbone, une matière plastique électriquement conductrice ou des mélanges de ceux-ci.
